# EUROPÄISCHE PATENTSCHRIFT

(11) **EP 1 899 137 B1**
(45) Veröffentlichungstag und Bekanntmachung des Hinweises auf die Patenterteilung: **22.07.2009**
(21) Anmeldenummer: 06753767.0
(22) Anmeldetag: 19.05.2006
(51) Int. Cl.: B29C 47/34, B65H 23/32

(54) **UMLENKEINRICHTUNG FÜR EINE FOLIENBAHN**
DEVIATION DEVICE FOR A WEB OF FILM
DISPOSITIF DEFLECTEUR POUR BANDE PELLICULAIRE

(30) Priorität: 23.05.2005 DE 102005024136; 30.07.2005 DE 102005035750
(43) Veröffentlichungstag der Anmeldung: 19.03.2008
(73) Patentinhaber: Windmöller & Hölscher KG, 49525 Lengerich/Westf. (DE)
(72) Erfinder: BACKMANN, Martin, 49525 Lengerich (DE); LINKIES, Jürgen, 49536 Lienen (DE); PUTSCH, Ingo, 49525 Lengerich (DE)
(86) Internationale Anmeldenummer: PCT/EP2006/004834
(87) Internationale Veröffentlichungsnummer: WO 2006/125586

(56) Entgegenhaltungen:
- EP-A- 0 347 499
- DE-C1- 19 751 417
- DE-U1-8202004 010 54
- US-A- 4 605 146
- US-A- 5 830 275

## Beschreibung

Die Erfindung betrifft eine Umlenkeinrichtung für eine Folienbahn nach dem Oberbegriff des Anspruchs 1 sowie ein Verfahren zum Umlenken einer Folienbahn nach dem Oberbegriff des Anspruchs 10.

Derartige Umlenkeinrichtungen werden in Anlagen zur Herstellung von Folienbahnen in zum Teil großer Anzahl eingesetzt. Eine solche Anlage ist beispielhaft in der DE 102 44 869 A1 beschrieben. Die dort beschriebene Anlage ist eine so genannte Blasfolienanlage, mit welcher, zumindest zunächst, schlauchförmige Folienbahnen herstellbar sind. Diese werden über verschiedene Umlenkeinrichtungen geführt und später direkt als Folienschläuche aufgewickelt oder zunächst in Folienbahnen getrennt und dann aufgewickelt. Derartige Umlenkeinrichtungen werden aber auch in Anlagen eingesetzt, mit welchen Flachfolie hergestellt wird. Bestandteile solcher Flachfolienanlangen sind in der DE 198 23 304 A1 beschrieben. Auch die mit solchen Anlagen produzierten Folienbahnen werden über verschiedene Umlenkeinrichtungen geführt und später aufgewickelt. Selbstverständlich werden auch in vielen anderen folienproduzierenden oder folienverarbeitenden Anlagen und Maschinen Umlenkeinrichtungen eingesetzt.

In bekannten Umlenkeinrichtungen kommen Umlenkelemente zum Einsatz, die in Wirkverbindung mit der Folienbahn stehen. Mit "Umlenken" kann im Sinne der Erfindung auch eine "Nullumlenkung" gemeint sein, das heißt, dass die Folie nicht aus ihrer Transportebene heraus umgelenkt wird. Eine Umlenkeinrichtung dient im Falle der "Nullumlenkung" vielmehr der Führung der Folienbahn. Häufig stehen die Umlenkelemente in berührendem Kontakt mit der Folienbahn. Mit Umlenkeinrichtungen müssen sich aber auch Folienbahnen führen beziehungsweise umlenken lassen, die zumindest eine berührungsempfindliche Oberfläche aufweisen. Um diese Oberflächen möglichst nicht zu beschädigten oder anderweitig zu beeinflussen, wird die Folienbahn zumindest zum Teil in den Umlenkeinrichtungen berührungsfrei geführt. Es hat sich gezeigt, dass dazu das Konzept, zwischen Umlenkelement und der Folienbahn ein Luftpolster aufzubauen, als sehr geeignet anzusehen ist. Die Patentanmeldung DE 44 40 647 A1 der Anmelderin zeigt ein Umlenkelement, welches mit Öffnungen oder Bohrungen versehen ist, aus welchen ein Fluid, vorzugsweise Luft, ausströmt, das mit Überdruck im Inneren des Umlenkelements vorliegt. Auf diese Weise wird zwischen Umlenkelement und Folienbahn ein Luftpolster erzeugt.

Eine weitere Umlenkeinrichtung ist aus der US 5,830,275 bekannt. Hierbei wird die Luft für das Luftpolster, mit welchem die zu transportierende Papierbahn auf Abstand zur Umlenkeinrichtung gehalten wird, von der Papierbahn mitgeschleppt. Gegebenenfalls wird durch Öffnungen in der Umlenkeinrichtungen Luft in Richtung auf die Bahn geleitet. Die Umlenkeinrichtung selbst verfügt über eine Antriebsvorrichtung und dreht sich mit einer Umfangsgeschwindigkeit, die im Wesentlichen der Transportgeschwindigkeit der Papierbahn entspricht. Da Folienbahnen jedoch langsamer als Papierbahnen bewegt werden, können diese keine Luft mitschleppen.

Das Patent DE 197 51 417 C1 offenbart eine ähnliche Umlenkeinrichtung, allerdings für nasse Textilbahnen, bei der das Umlenkelement in Laufrichtung der Warenbahn drehangetrieben ist.

Das Patent US 4,605,146 offenbart eine Umlenkeinrichtung, in der ein Umlenkelement drehbar ist. Das Umlenkelement ist jedoch nicht angetrieben. Auch feststehende Umlenkelemente sind offenbart, so dass sich die Transportgeschwindigkeit der Bahn von der Umfangsgeschwindigkeit des Umlenkelements unterscheidet. Um ein Luftpolster zu erzeugen Ein besonderes Problem bei den bekannten Umlenkelementen, die eine Folienbahn mit einem Luftpolster führen, liegt darin, dass aufgrund der endlichen Anzahl an Öffnungen oder Bohrungen oft kein gleichmäßiges Luftpolster erzeugbar ist, was zur Folge hat, dass die Folie Falten werfen kann oder dass die Folie das Umlenkelement berührt.

Die Aufgabe der vorliegenden Erfindung besteht darin, eine verbesserte Umlenkeinrichtung für Folienbahnen zur Verfügung zu stellen, mit welcher die Folienbahn möglichst ohne Qualitätseinbußen führbar ist.

Die Aufgabe wird gelöst durch eine Umlenkeinrichtung nach dem Oberbegriff des Anspruchs 1, welche weiterhin die Merkmale des Kennzeichens des Anspruchs 1 umfasst.

Demnach ist vorgesehen, dass die Drehrichtung des Umlenkelements an der Umlenkstelle der Transportrichtung der Folienbahn entgegengesetzt ist. An der Umlenkstelle sind also die Richtungen der Geschwindigkeitsvektoren des Umlenkelements und der Folienbahn gegeneinander gerichtet, Durch diese Maßnahme braucht der Betrag der Umfangsgeschwindigkeit des Umlenkelements nicht so groß gewählt zu werden, als wenn die Richtungen der Geschwindigkeitsvektoren gleich sind.

Die Umfangsgeschwindigkeit unterscheidet sich also von der Transportgeschwindigkeit der Folienbahn. Auf diese Weise wird an der Außenoberfläche des Umlenkelements ein Luftpolster erzeugt, wie es im Folgenden beschrieben wird. An dem sich drehenden Umlenkelement und/oder an der Folienbahn haften Luftschichten an, so dass bei unterschiedlichen Geschwindigkeiten zwischen Umlenkelement und Folienbahn eine laminare Luftströmung entsteht. Die laminare Luftströmung ist dabei stationär und derart stabil, dass ein Kontakt der Folienbahn mit dem Umlenkelement vermieden wird. Die Folienbahn wird also mit einem von der laminaren Luftströmung hervorgerufenen Luftpolster getragen. Ein weiterer Vorteil der erfindungsgemäßen Umlenkeinrichtung liegt darin, dass das Luftpolster quer zur Transportrichtung der Folienbahn sehr gleichmäßig ist. Insgesamt kann die Folienbahn mit der erfindungsgemäßen Umlenkeinrichtung derart geführt werden, dass Beschädigungen vermieden werden.

Ein zusätzlicher Vorteil der erfindungsgemäßen Umlenkeinrichtung ist in der kostengünstigen Herstellung und in dem kostengünstigen Betrieb zu suchen. Die Funktion des Umlenkelementes ist nicht an bestimmte Materialien gebunden, so dass hier kostengünstige Materialien, beispielsweise Metall oder Kunststoff, gewählt werden können. Auch braucht ein solches Umlenkelement nicht weiter bearbeitet zu werden, um es beispielsweise mit Bohrungen oder Öffnungen zu versehen. Zum Betrieb des Umlenkelements ist lediglich ein einfacher Antriebsmotor notwendig, etwa ein Elektromotor. Es können auch mehrere Umlenkelemente von einer Antriebsvorrichtung aus angetrieben werden. Auf eine Druckluftquelle kann beim Betrieb einer erfindungsgemäßen Umlenkvorrichtung verzichtet werden.

In einer vorteilhaften Ausführungsform ist der Betrag der Umfangsgeschwindigkeit des Umlenkelements größer als der Betrag der Transportgeschwindigkeit der Folienbahn. Auf diese Weise haftet die das Luftpolster hervorrufende laminare Strömung an dem Umlenkelement an. Die Umfangsgeschwindigkeit des Umlenkelements kann einfacher eingestellt oder variiert werden als die Transportgeschwindigkeit der Folienbahn, die meist durch andere in den eingangs beschriebenen Anlagen vorhandenen Elementen begrenzt ist. So kann auf einfache Weise die für eine gute Funktion der Umlenkeinrichtung erforderliche Relativgeschwindigkeit, also der Unterschied zwischen der Umfangsgeschwindigkeit des Umlenkelements und der Transportgeschwindigkeit der Folienbahn, eingestellt werden.

Die Umfangsgeschwindigkeit des Umlenkelements beträgt in einer vorteilhaften Ausführungsform der Erfindung mindestens 10 m/s. Besonders vorteilhaft ist es, wenn diese Geschwindigkeit zwischen 20 m/s und 30 m/s liegt. Es kann aber auch notwendig sein, eine Geschwindigkeit zu wählen, die größer als 30m/s ist, um eine Folienbahn zu führen.

Die Qualität des Luftpolsters lässt sich noch durch weitere Maßnahmen verbessern. So ist in einer vorteilhaften Weiterbildung der erfindungsgemäßen Umlenkeinrichtung vorgesehen, die Außenoberfläche des Umlenkelements, entlang welcher die Folienbahn geführt wird, besonders glatt zu gestalten, um eine laminare Luftströmung möglichst ohne Strömungsabrisse erzeugen zu können. Dieses Ziel kann mit einer Chrombeschichtung erreicht werden. Unabhängig davon oder auch in Verbindung mit der Chromschicht kann es vorgesehen sein, die Rautiefe der Außenoberfläche auf ein vorbestimmtes Maß zu bringen. Eine Rautiefe von maximal 0,5 Mikrometern, insbesondere von maximal 0,2 Mikrometern, wird als besonders vorteilhaft angesehen.

Andererseits wird es auch als vorteilhaft angesehen, wenn die Außenoberfläche rau ist mit einer Rautiefe von 2 bis 4 Mikrometern.

Selbstverständlich kann auch jede andere Rautiefe, je nach Folienart, vorteilhaft sein, insbesondere der Bereich zwischen 0,5 und 2 Mikrometern.

Um eine Folienbahn besser führen zu können, ist es in einer vorteilhaften Ausführungsform der Erfindung vorgesehen, dass das Umlenkelement entlang seiner axialen Erstreckung unterschiedliche Eigenschaften aufweist. Auf diese

Weise wird entlang dieser axialen Erstreckung ein möglichst gleichmäßiges Luftpolster erzeugt. So ist es möglich, dass die Rautiefe entlang dieser axialen Erstreckung unterschiedlich ist. Alternativ oder auch zusätzlich können die geometrischen Dimensionen des Umlenkelements entlang dieser axialen Erstreckung variieren. So kann etwa der Abstand der Außenoberfläche zu der entlang der axialen Erstreckung laufenden Trägheitsachse des Umlenkelements unterschiedlich sein. Ist etwa das Umlenkelement eine Walze, so kann der Durchmesser der Walze entlang der Drehachse der Walze variieren. Auch verschiedene Materialien können an verschiedenen Stellen des Umlenkelements verwendet werden.

Weitere Ausführungsbeispiele der Erfindung gehen aus der gegenständlichen Beschreibung und den Ansprüchen hervor.

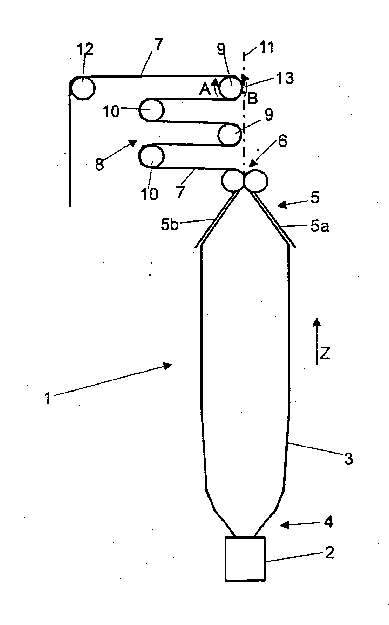

Die einzige Figur zeigt eine schematische Seitenansicht einer Anlage 1 zur Folienproduktion mit einer erfindungsgemäßen Umlenkeinrichtung.

Die Anlage 1 umfasst einen Düsenkopf 2, welchem Kunststoffschmelze zugeführt wird. Über nicht näher dargestellte Verteiler wird die Kunststoffschmelze auf einen ringförmigen Kanal verteilt, der am oberen Ende des Düsenkopfes 2 in einer ringförmigen Düse mündet. Aus dieser Düse tritt die Kunststoffschmelze in der Transportrichtung z aus, kühlt auf dem weiteren Transportweg ab und bildet dann einen Folienschlauch 3. Im Bereich 4 oberhalb des Düsenkopfes 2 ist die Kunststoffschmelze noch nicht vollständig verfestigt. Die Erzeugung eines Überdrucks im Inneren des Folienschlauches 3 führt im Bereich 4 dazu, dass sich der Folienschlauch 3 aufweitet. Diese Aufweitung wird auch als Recken bezeichnet.

Der Folienschlauch 3 wird durch ein angetriebenes Abzugswalzenpaar 6 in Transportrichtung z abgezogen. Zuvor durchläuft der Folienschlauch 3 eine Flachlegeeinrichtung 5 mit den Flachlegeplatten 5a, 5b. Die Flachlegeeinrichtung 5 erzeugt aus dem Folienschlauch 3 eine doppellagige Folienbahn 7. Die Folienbahn 7 wird nun einer Reversiervorrichtung 8 zugeführt. Die Folienbahn 7 kann auch auf nicht dargestellte Weise bereits in der Umgebung des Abzugswalzenpaares 6 entlang ihrer Seitekanten aufgeschnitten werden, so dass hinter dem Abzug zwei aufeinander liegende, aber nicht mehr zusammenhängende Folienbahnen vorliegen. Diese Folienbahnen können dann zwei verschiedenen Reversiervorrichtungen zugeführt werden.

Eine derartige Reversiervorrichtung 8 besteht aus Wendestangen 9 und Umlenkwalzen 10. Die Funktion und die Wirkungsweise einer solchen Reversiervorrichtung 8 ist beispielsweise in der DE 100 40 055 A1 beschrieben, so dass an dieser Stelle auf eine detaillierte Darstellung verzichtet wird. Die Reversiervorrichtung 8 dreht um die Reversierachse 11. Nach dem Durchlaufen der Reversiervorrichtung 8 wird die Folienbahn 7 über eine Umlenkwalze 12 einer weiterverarbeitenden Einrichtung zugeführt, die beispielsweise die doppellagige Folienbahn 7 in mehrere Folienbahnen aufteilt und/oder die Folienbahn aufwickelt. Die Reversiervorrichtung 8 ist bei diesem Ausführungsbeispiel als erfindungsgemäße Umlenkeinrichtung ausgebildet. Dazu sind die Wendestangen 9 mittels einer nicht dargestellten Antriebsvorrichtung antreibbar. Alternativ oder zusätzlich sind auch die Umlenkwalzen 10 antreibbar. Die Drehrichtung der Wendestangen 9 ist mit dem Pfeil A angedeutet. Diese Drehrichtung ist der Transportrichtung B der Folienbahn 7 an der Umlenkstelle 13 entgegengesetzt. Auch die Umlenkwalze 12 kann auf diese Weise angetrieben werden.

Auch wenn in dem gezeigten Ausführungsbeispiel die erfindungsgemäße Umlenkeinrichtung als reversierender Abzug ausgeprägt ist, ist zu betonen, dass erfindungsgemäße Umlenkeinrichtungen in verschiedenen Bestandteilen der eingangs erwähnten Anlagen eingesetzt werden können. Zu diesen Bestandteilen zählen insbesondere Kalibriereinrichtungen, Flachlegeeinrichtung, Führungseinrichtungen und Wickeleinrichtungen. Erfindungsgemäße Umlenkeinrichtungen können auch beispielsweise an Druckmaschinen, an anderen Folienveredelungsmaschinen und an Folienverarbeitungsmaschinen eingesetzt werden. Auch hier finden sich beispielsweise Führungseinrichtungen und Wickeleinrichtungen für Folienbahnen, die ein- oder sogar mehrlagig sein können.

| **Bezugszeichenliste** | |
|---|---|
| 1 | Anlage zur Folienproduktion |
| 2 | Düsenkopf |
| 3 | Folienschlauch |
| 4 | Bereich oberhalb des Düsenkopfes 2 |
| 5 | Flachlegeeinrichtung |
| 5a, 5b | Flachlegeplatten |
| 6 | Abzugswalzenpaar |
| 7 | Folienbahn |
| 8 | Reversiervorrichtung |
| 9 | Wendestange |
| 10 | Umlenkwalze |
| 11 | Reversierachse |
| 12 | Umlenkwalze |
| 13 | Umlenkstelle |
| A | Drehrichtung der Wendestange 9 |
| B | Transportrichtung der Folienbahn 7 an der Umlenkstelle |
| z | Transportrichtung des Folienschlauches |
| | |
| | |
| | |
| | |
| | |
| | |
| | |

## Patentansprüche

1. Umlenkeinrichtung (8) für eine Folienbahn (7), welche zumindest ein Umlenkelement (9, 10, 12) umfasst, das an der Umlenkstelle (13) der Folienbahn (7) mit dieser in Wirkverbindung steht und die Folienbahn (7) mit einem Luftpolster führt,
wobei das Umlenkelement (9,10,12) drehbar ist und über eine Antriebsvorrichtung verfügt, welche das Umlenkelement (9, 10, 12) in eine Drehung versetzt, so dass sich die Umfangsgeschwindigkeit des Umlenkelements (9, 10, 12) von Transportgeschwindigkeit der Folienbahn (7) unterscheidet,
**dadurch gekennzeichnet, dass**
die Drehrichtung (A) des Umlenkelements (9, 10, 12) an der Umlenkstelle (13) der Transportrichtung (B) der Folienbahn (7) entgegengesetzt ist.

2. Umlenkeinrichtung (8) nach Anspruch 1,
**dadurch gekennzeichnet, dass**
der Betrag der Umfangsgeschwindigkeit des Umlenkelements (9,10,12) größer ist als der Betrag der Transportgeschwindigkeit der Folienbahn (7).

3. Umlenkeinrichtung (8) nach einem der vorstehenden Ansprüche,
**dadurch gekennzeichnet, dass**
das Umlenkelement (9, 10, 12) mit einer äußeren Chromschicht versehen ist.

4. Umlenkeinrichtung (8) nach einem der vorstehenden Ansprüche,
**dadurch gekennzeichnet, dass**
das Umlenkelement (9, 10, 12) zumindest an Teilen seiner Außenoberfläche eine Rautiefe von höchstens 0,5 Mikrometern aufweist.

5. Umlenkeinrichtung (8) nach einem der vorstehenden Ansprüche,
**dadurch gekennzeichnet, dass**
das Umlenkelements (9, 10, 12) zumindest an Teilen seiner Außenoberfläche eine Rautiefe von höchstens 0,2 Mikrometern aufweist.

6. Umlenkeinrichtung (8) nach einem der vorstehenden Ansprüche,
**dadurch gekennzeichnet, dass**
das Umlenkelement (9, 10, 12) zumindest teilweise eine raue Außenoberfläche mit einer Rautiefe von 2-4 Mikrometern aufweist.

7. Umlenkeinrichtung (8) nach einem der vorstehenden Ansprüche,
**dadurch gekennzeichnet, dass**
die Außenoberfläche des Umlenkelements (9, 10, 12) entlang seiner Erstreckung quer zur Transportrichtung (B) der Folienbahn (7) eine unterschiedliche Rautiefe aufweist.

8. Umlenkeinrichtung (8) nach einem der vorstehenden Ansprüche,
**dadurch gekennzeichnet, dass**
das Umlenkelement (9, 10, 12) eine Walze mit einem entlang der Walzenachse unterschiedlichem Walzendurchmesser ist.

9. Verfahren zur Umlenkung einer Folienbahn (7) an einer Umlenkstelle mittels eines Umlenkelements (9, 10, 12), wobei die Folienbahn (7) an der Umlenkstelle mit einem Luftpolster geführt wird,
wobeidas Umlenkelement (9, 10, 12) in eine Drehung versetzt wird, so dass dessen (9, 10, 12) Umfangsgeschwindigkeit sich von der Transportgeschwindigkeit der Folienbahn (7) unterscheidet
**dadurch gekennzeichnet, dass**
das Umlenkelements (9, 10, 12) in eine Drehung versetzt wird, dessen Drehrichtung (A) an der Umlenkstelle (13) der Transportrichtung (B) der Folienbahn *(7) entgegengesetzt ist.

10. Verfahren nach vorstehendem Anspruch,
**dadurch gekennzeichnet, dass**
das Umlenkelement (9, 10, 12) mit einer Umfangsgeschwindigkeit von mindestens 10 m/s gedreht wird.

11. Verfahren nach einem der beiden vorstehenden Ansprüche,
**dadurch gekennzeichnet, dass**
das Umlenkelement (9, 10, 12) mit einer Umfangsgeschwindigkeit zwischen 20 m/s und 30 m/s gedreht wird.

## Claims

1. Deviation device (8) for a film web (7), which deviation device comprises at least one deviation element (9, 10, 12), which operatively interacts with the film web (7) at the point of deviation (13) of the film web (7) and guides the film web (7) on an air cushion,
while the deviation element (9, 10, 12) can be rotated and comprises a drive device, which sets the deviation element (9, 10, 12) into rotation so that the peripheral speed of the deviation element (9, 10, 12) differs from the transport speed of the film web (7),
**said deviation device being characterized in that**
the direction of rotation (A) of the deviation element (9, 10, 12) is opposite to the transport direction (B) of the film web (7) at the point of deviation (13).

2. Deviation device (8) according to claim 1,
**characterized in that**
the value of the peripheral speed of the deviation element (9, 10, 12) is greater than that of the transport speed of the film web (7).

3. Deviation device (8) according to one of the preceding claims,
**characterized in that**
the deviation element (9, 10, 12) is provided with an outer chromium layer.

4. Deviation device (8) according to one of the preceding claims,
**characterized in that**
the deviation element (9, 10, 12) has a maximum roughness depth of 0,5 micrometers at least on certain parts of its outer surface.

5. Deviation device (8) according to one of the preceding claims,
**characterized in that**
the deviation element (9, 10, 12) has a maximum roughness depth of 0,2 micrometers at least on certain parts of its outer surface.

6. Deviation device (8) according to one of the preceding claims,
**characterized in that**
the deviation element (9, 10, 12) has a rough outer surface, at least on certain parts, with a roughness depth of 2 - 4 micrometers.

7. Deviation device (8) according to one of the preceding claims,
**characterized in that**
the outer surface of the deviation element (9, 10, 12) has a variable roughness depth along its extension directed transversely to the transport direction (B) of the film web (7).

8. Deviation device (8) according to one of the preceding claims,
**characterized in that**
the deviation element (9, 10, 12) is a roller having a diameter that is variable along the roller axis.

9. Method of deviating a film web (7) at a point of deviation by means of a deviation element (9, 10, 12), the film web (7) being guided at the point of deviation on an air cushion,
the deviation element (9, 10, 12) is set into rotation so that the peripheral speed thereof (9, 10, 12) differs from the transport speed of the film web (7)
**said method being characterized in that**
the deviation element (9, 10, 12) is set into rotation, the direction of rotation (A) of the deviation element being opposite to the transport direction (B) of the film web (7) at the point of deviation.

10. Method according to the preceding claim,
**characterized in that**
the deviation element (9, 10, 12) is rotated at a peripheral speed of at least 10 m/s.

11. Method according to one of the two preceding claims,
**characterized in that**
the deviation element (9, 10, 12) is rotated at a peripheral speed lying in the range of 20 m/s and 30 m/s.

## Revendications

1. Dispositif déflecteur (8) pour une bande en feuille (7), qui comprend au moins un élément déflecteur (9, 10, 12) qui, à l'emplacement de déflexion (13) de la bande en feuille (7) est fonctionnellement lié à celle-ci et guide la bande en feuille (7) avec un coussinet d'air,
où l'élément déflecteur (9, 10, 12) est apte à tourner et dispose d'un dispositif d'entraînement qui entraîne l'élément déflecteur (9, 10, 12) en une rotation de sorte que la vitesse périphérique de l'élément déflecteur (9, 10, 12) se distingue de la vitesse de transport de la bande en feuille (7),
**caractérisé en ce que**
la direction de rotation (A) de l'élément déflecteur (9, 10, 12) à l'emplacement de déflection (13) est opposée à la direction de transport (B) de la bande en feuille (7).

2. Dispositif déflecteur (8) selon la revendication 1, **caractérisé en ce que**
la valeur de la vitesse périphérique de l'élément déflecteur (9, 10, 12) est plus grande que la valeur de la vitesse de transport de la bande en feuille (7).

3. Dispositif déflecteur (8) selon l'une des revendications précédentes, **caractérisé en ce que**
l'élément déflecteur (9, 10, 12) est pourvu d'une couche de chrome extérieure.

4. Dispositif déflecteur (8) selon l'une des revendications précédentes, **caractérisé en ce que**
l'élément déflecteur (9, 10, 12) présente au moins à des parties de sa surface extérieure une profondeur de rugosité de 0,5 micromètre au maximum.

5. Dispositif déflecteur (8) selon l'une des revendications précédentes, **caractérisé en ce que**
l'élément déflecteur (9, 10, 12) présente au moins à des parties de sa surface extérieure une profondeur de rugosité de 0,2 micromètre au maximum.

6. Dispositif déflecteur (8) selon l'une des revendications précédentes, **caractérisé en ce que**
l'élément déflecteur (9, 10, 12) présente au moins partiellement une surface extérieure rugueuse d'une profondeur de rugosité de 2-4 micromètres.

7. Dispositif déflecteur (8) selon l'une des revendications précédentes, **caractérisé en ce que**
la surface extérieure de l'élément déflecteur (9, 10, 12) présente le long de son extension transversalement à la direction de transport (B) de la bande en feuille (7) une profondeur de rugosité différente.

8. Dispositif déflecteur (8) selon l'une des revendications précédentes, **caractérisé en ce que**
l'élément déflecteur (9, 10, 12) est un cylindre avec un diamètre de cylindre qui est différent le long de l'axe du cylindre.

9. Procédé de déflection d'une bande en feuille (7) à un emplacement de déflection au moyen d'un élément déflecteur (9, 10, 12), où la bande en feuille (7) est guidée à l'emplacement déflecteur avec un coussinet d'air,
où l'élément déflecteur (9, 10, 12) est entraîné en rotation de sorte que sa (9, 10, 12) vitesse périphérique se distingue de la vitesse de transport de la bande en feuille (7), **caractérisé en ce que**
l'élément déflecteur (9, 10, 12) est entraîné en une rotation dont le sens de rotation (A) à l'emplacement déflecteur (13) est opposé à la direction de transport (B) de la bande en feuille (7).

10. Procédé selon la revendication précédente, **caractérisé en ce que**
l'élément déflecteur (9, 10, 12) est amené à tourner à une vitesse périphérique d'au moins 10 m/s.

11. Procédé selon l'une des deux revendications précédentes, **caractérisé en ce que**
l'élément déflecteur (9, 10, 12) est amené à tourner à une vitesse périphérique entre 20 m/s et 30 m/s.
